# EUROPEAN PATENT SPECIFICATION

(11) **EP 4 234 981 B1**
(45) Date of publication and mention of the grant of the patent: **09.04.2025**
(21) Application number: 22159303.1
(22) Date of filing: 28.02.2022
(51) Int. Cl.: B62M 9/16, F16H 55/14

(54) **PULLEY FOR A REAR DERAILLEUR OF A BICYCLE**
RIEMENSCHEIBE FÜR EINE KETTENSCHALTUNG EINES FAHRRADS
POULIE POUR UN DÉRAILLEUR ARRIÈRE DE BICYCLETTE

(43) Date of publication of application: 30.08.2023
(73) Proprietor: Golec, Marcin, London SW19 2RR (GB)
(72) Inventor: Golec, Marcin, London SW19 2RR (GB)
(74) Representative: Farago-Schauer, Peter Andreas

(56) References cited:
- DE-A1- 102015 215 670
- DE-U1- 29 909 603
- US-A- 975 938
- US-B2- 10 253 865

## Description

The present invention relates to a toothed pulley for a rear derailleur of a bicycle carrying on each of its side faces a cushioning ring made of an elastically deformable material and adapted to come in contact with link plates of a roller chain running over the pulley.

A toothed pulley with a ring made of an elastically deformable material is disclosed in US 975 938 A in the form of a sprocket, wherein a circular cushioning rings serve as cushions between the teeth of the sprocket and the link plates of a roller chain trained engaged with the sprocket. As disclosed therein, the circular cushioning rings may have an annular or rectangular cross section. Document US975938A shows the preamble of claim 1.

Further toothed pulleys with respective circular cushioning rings made of an elastically deformable material are disclosed in US 10 253 865 B2 in the form of sprockets of a multi-gear cassette for a rear wheel of a bicycle, wherein the circular cushioning rings dampen the forces produced by the chain members running from the slack span of the chain onto a sprocket. These circular cushioning rings have rectangular cross sections.

The prior art pulleys have the problem that nevertheless they are relatively noisy and buckling in operation.

Bicycle chains of an unconventional type, so-called flattop chains (or AXS chains), are known in the art, wherein the respective tops of the link plates are straight-lines, which enables a narrower chain construction with increased strength and durability.

If such a chain is used in a bicycle having a derailleur, there may be the problem that such a chain has some difficulties to run low-noise and smoothly through the derailleur. In particular, there would be the problem that the operation is very noisy and buckling. Accordingly, it is an object of the present invention to provide a pulley for a bicycle rear derailleur with silencing characteristics which is very low-noise in operation and runs very smoothly also with flattop chains.

The above object and further objects which will become apparent hereinafter are achieved by a pulley having the features of claim 1.

The present invention also provides for a rear derailleur of a bicycle according to claim 14 including the pulley of the invention.

Further advantageous features are set out in the dependent claims.

According to the invention, the pulley is for a bicycle rear derailleur. Such a derailleur usually comprises, as is known in the art, a guide pulley and a tension pulley both being rotatably mounted on a derailleur cage which is movable with respect to the bicycle and adapted to guide and tension a bicycle roller chain in an S-shape feeding to the cassette. The cage can be positioned under the desired sprocket of a multi-gear cassette attached to the hub of a rear wheel of a bicycle by an arm that can swing back and forth under the sprockets. Gear shifting is carried out by moving the arm which transfers the chain from one sprocket to another while pedaling.

According to one aspect of the invention, the pulley includes respective circumferential supports formed adjacent to each side face of the pulley and extending axially away from the side face of the pulley, wherein a respective cushioning ring is supported by a respective circumferential support. **In** a side view of the pulley, as seen in the axial direction of the pulley, each cushioning ring has a preformed polygonal outline at the external side thereof, i.e. the face facing the roller chain, wherein the number of corners of the polygon is equal to the number of teeth of the pulley and wherein the corners of the polygon are angularly offset from the centers of the teeth of the pulley by the half angular distance between adjacent teeth of the pulley in the mounted state of the cushioning ring having the preformed polygonal outline.

In the specification, whenever the terms "radial direction" and "axial direction" are respectively used, they intend the radial and the axial directions of the pulley.

Furthermore, in the present specification, the cushioning ring having a preformed polygonal outline at the face thereof facing the roller chain, will be designated as polygonal cushioning ring.

According to the invention, the polygonal cushioning ring having a preformed polygonal outline should be understood as a polygonal cushioning ring having intrinsically a polygonal outline on its own. In other words, the polygonal shape or outline is present both in an unmounted and a mounted state of the polygonal cushioning ring. Further, the term "outline" is intended to cover manufacturing tolerances or polygons with slightly rounded corners or polygons with otherwise slightly modified corners or polygons with small indentations or modifications in the straight portions.

The polygonal cushioning rings are accommodated in the respective circumferential support in a rotationally secured manner and preferably with a certain tension. The circumferential supports may be advantageously made in one piece with the pulley. Alternatively, the circumferential supports may be fixedly joined with the pulley. In a further alternative, one of the circumferential supports may be formed in one piece with the pulley and another circumferential support may be fixedly joined to the pulley.

Advantageously, as the polygonal cushioning ring has a preformed polygonal outline at the face facing the roller chain, the outline of the circumferential support may have any shape, as long as the outline of the circumferential support conforms the outline of the polygonal cushioning ring at the face thereof facing the circumferential support. In this way, a decoupling of the shape of the outline of the circumferential support from the shape of the outline of the polygonal cushioning ring at the face facing the roller chain is achieved, as seen in the axial direction.

In view of the decoupling of the respective shapes discussed above, the amount of the material of the polygonal cushioning ring may be increased or adjusted as need be. By increasing the amount of material of the polygonal cushioning ring a more silent operation of the pulley can be achieved as compared to solutions, wherein the cushioning ring is elastically retained on a support and conforms exactly to the outline of the support.

Further, in view of the above discussed decoupling of the respective shapes, the circumferential support may have a different outline, as seen in the axial direction, than the outline of the polygonal cushioning ring at its face facing the roller chain, as seen in the axial direction, as far as shape and/or angular orientation is concerned.

In one embodiment, the circumferential support may have a circular or an elliptical or any outline different from the outline of the polygonal cushioning ring at its face facing the roller chain, as seen in the axial direction. Preferred in terms of manufacturing is a circular or an elliptical outline.

It is also imaginable that the outline of the circumferential support and the outline of the polygonal cushioning ring at the face facing the roller chain, as seen in the axial direction, describe the same geometrical form, i.e., a polygon, but have a different angular orientation. In other words, the shape of the outline of the polygonal cushioning ring at the face facing the roller chain, as seen in the axial direction, may be angularly offset with respect to the shape of the outline of the circumferential support, as seen in the axial direction.

As the outline of the circumferential support, as seen in the axial direction, is freely selectable, as compared to conventional solutions, the degree of rotational security of the polygonal cushioning ring can be adjusted according to the requirements by the free choice of the outline of the circumferential support.

Inasmuch as, the corners of the polygon are angularly offset from the center of the teeth of the pulley, the polygonal cushioning rings have respective straight portions, each straight portion extending under one respective tooth of the pulley and being angularly aligned with the respective tooth of the pulley.

The angular offset of the polygon corners from the teeth is particularly suitable in cases, wherein the derailleur is intended for chains of an unconventional type, wherein tops of the link plates are straight-line which enables a narrower chain construction with increased strength and durability. Such chains are known in the art as AXS or "flattop" chains and are manufactured by the SRAM corporation.

The inventive pulley with polygonal cushioning rings is particularly suited when embodied as a guide pulley of a rear derailleur in conjunction with AXS "flattop" chains devised as mentioned above. In a rear derailleur, the chain is running with the straight tops (flattops) over the guide pulley and the straight tops are perfectly matching the straight portions of the polygonal cushioning ring of the guide pulley. Accordingly, the impact of the chain on the guide pulley is smooth and silent.

While the polygonal cushioning ring according to the invention is particularly advantageous for the guide pulley of a bicycle rear derailleur if used with AXS "flattop" chains, also the tension pulley of a bicycle rear derailleur may advantageously have a polygonal cushioning ring if interacting with the flattop of a "flattop" type chain.

Preferably, the circumferential support may also include a radial extension which extends outwardly in a radial direction from the circumferential support and which forms preferably a flange extending upwardly from the circumferential support.

According to the invention antirotation means are provided for securing the polygonal cushioning ring against a rotation with respect to the circumferential support.

Said antirotation means may be designed as at least one recess in the circumferential support with a corresponding protrusion of material in the polygonal cushioning ring fitting into said recess and/or as at least one recess in the polygonal cushioning ring with a corresponding protrusion of material in the circumferential support fitting into said recess.

Alternatively, said antirotation means may be provided by means of a sinuous or cornered outline of the circumferential support, as seen in the axial direction, and a corresponding inner shape of the polygonal cushioning ring at the face facing the circumferential support.

Also, any complementary shapes, as long as such shapes provide for a rotational security, may be provided. Such complementary shapes may include polygonal shapes, like triangular, square, pentagonal, hexagonal, heptagonal, octagonal, but are not limited to the same.

In another embodiment, said antirotation means may be provided by a fixation of the polygonal cushioning ring onto the circumferential support, for instance by means of adhesion / bonding or by fixing means, like screws. Also combinations of different types of antirotation means may be provided.

If the circumferential support is designed in the shape of a polygon, as seen in the axial direction, the corners of the circumferential support can be rounded. The corners of the radial extension of the circumferential support may also be rounded.

The circumferential support and the radial extension may be made in one piece with the pulley. Alternatively, they may be manufactured separately and fixedly joined to the pulley. In a further alternative, the circumferential support and the radial extension at one side of the pulley may be made in one piece with the pulley and the circumferential support and the radial extension at another side of the pulley may be fixedly joined to the pulley.

Each polygonal cushioning ring may advantageously project radially from the radial extension of the circumferential support, preferably by at least 1/4 of the total radial height of the polygonal cushioning ring and more preferably by at least 2/5 of the total radial height of the polygonal cushioning ring.

The straight portions of the polygonal cushioning ring dampen the impact of the chain rollers on the depressions or valleys between consecutive teeth. As known in the art, the depressions or valleys are formed between consecutive teeth of a pulley as seen in the axial direction. Advantageously, the straight portions of the cushioning ring prevent, at least during the initial contact of the chain with the pulley, the contact of the chain rollers with the depressions or valleys between consecutive teeth, such that the polygonal cushioning ring is contacted only by the link plates of the chain. As straight portions of the polygonal cushioning ring are decoupled from the outline of the underlying circumferential support, the amount of cushioning material can be increased and accordingly the silencing or cushioning effect is improved.

The polygonal cushioning rings may have well known cross sections, for example square, rectangular or circular. In a preferred embodiment of the invention each polygonal cushioning ring comprises, at least on its side facing the roller chain, a groove extending along its entire perimeter length, which groove, as seen in a cross-sectional view through the polygonal cushioning ring, is a recess flanked by two protrusions, wherein the protrusions are adapted and orientated to come in contact with outer and inner link plates, respectively, of a roller chain running over the pulley. This further contributes to make the derailleur very silent and smooth running, because by the two protrusions which may be much narrower than the total width of the outer and inner link plates, relatively weak dampening forces can be provided.

In the above preferred embodiment, in a cross-sectional view through the polygonal cushioning ring the protrusions on each polygonal cushioning ring may be curved convexly and may be connected contiguously by the recess which is curved concavely, as seen from inside the polygonal cushioning ring.

The invention is suited for a special form of a bicycle rear derailleur wherein the pulleys are rotatably mounted to the cage by mounting means and an interposed radial bearing, wherein the mounting means are arranged so as to be spaced from the center of rotation of the pulleys and are positioned along a circular mounting opening provided in the cage spaced away from the center of rotation of the pulleys, so as to leave a free space in the center of the pulleys in its mounted state, as described in EP 20177531.9. The relevant teaching of EP 20177531.9 is herewith incorporated by reference.

The invention is also suited for common bicycle rear derailleurs, wherein, for instance, the pulleys are rotatably mounted between two lateral plates of the cage on central bearings which are fitted on central bolts which connect two lateral plates of the cage to each other.

The polygonal cushioning ring may be made from any elastically deformable material, like natural or synthetic rubber, polymer, elastomer or silicone or mixtures of the foregoing materials having a sufficient dimensional stability to maintain the intrinsic polygonal outline in the unmounted state thereof. The elastically deformable material must also allow to maintain the intrinsic polygonal outline in the mounted state of the polygonal cushioning ring and in use. The pulley can be made of plastic, metal or a reinforced composite, in particular polyamide reinforced with carbon fiber.

The above and other features of the invention will become apparent from the following description of preferred embodiments, given by way of non-limiting example with reference to the accompanying drawings, wherein:
- Figure 1: is a perspective view of a first embodiment of a pulley of a rear derailleur for a bicycle;
- Figure 2: is the same perspective view as in Figure 1 further showing a part of a roller chain running over the pulley;
- Figure 3: is a plan side view of the arrangement of Figure 2 as seen from a position lying distantly from the pulley on its axis;
- Figure 4: is a sectional view of the pulley of Figure 1 along the line 4-4 in Figure 3;
- Figure 5: is a sectional view of the pulley of Figure 1 along the line 5-5 in Figure 3;
- Figure 6: is a sectional view of the arrangement of Figure 2 along the line 6-6 in Figure 3;
- Figure 7: is a sectional view of the pulley of Figure 1 along a plane intersecting the polygonal cushioning ring mounted on the circumferential support of the pulley in a radial direction;
- Figure 8: is an enlarged sectional view of a radial outer part of the pulley along the line 8-8 in Figure 7, i.e., through the gap between two consecutive teeth of the pulley and through the antirotation means;
- Figure 9: is an enlarged sectional view of a radial outer part of the pulley along the line 9-9 in Figure 7, i.e., through one of the teeth of the pulley;
- Figure 10: is a plan side view of a second embodiment of a pulley of a rear derailleur for a bicycle;
- Figure 11: is a sectional view of the pulley of Figure 10 along the line 11-11 in Figure 10;
- Figure 12: is an enlarged view of Figure 11; and
- Figure 13: is a schematic view of the rear part of a bicycle having a derailleur which is equipped with a tension pulley and a guide pulley as shown in the foregoing Figures 1 to 12.

Conventionally, pulleys of a rear derailleur may be rotatably mounted between two lateral plates of a cage on central bearings which are fitted on central bolts which connect two lateral plates of the cage to each other.

Pulleys as shown and described herein may also be mounted by mounting means (and not by central bolts) and an interposed radial bearing, wherein the mounting means are arranged so as to be spaced from the center of rotation of the pulley. The mounting means are positioned along a circular mounting opening provided in the cage spaced away from the center of rotation of the pulley. Such a bearing, which may be a ball bearing, a roller bearing or a slide bearing, may have a much larger radius than conventional bearings of the pulleys of a rear derailleur. The cage can be a single-plate or a two-plate cage. Such a bearing can be arranged so as to leave a free space in the center of the guide pulley in its mounted state, which provides for a free space which works against the accumulation of dirt because rotating pulley structural arms have been eliminated, and the chain guide is easy to clean. In addition, the free space, if provided at least in the center of the tension pulley, provides for a totally new and impressive look of the derailleur. With respect to this, reference is made to the pertinent teachings of a former patent application of the applicant of the present invention having the title "Improved chain guide for a rear derailleur of a bicycle" filed on May 29, 2020 with the EP as EP 20177531.9, the content of which is herewith incorporated by reference.

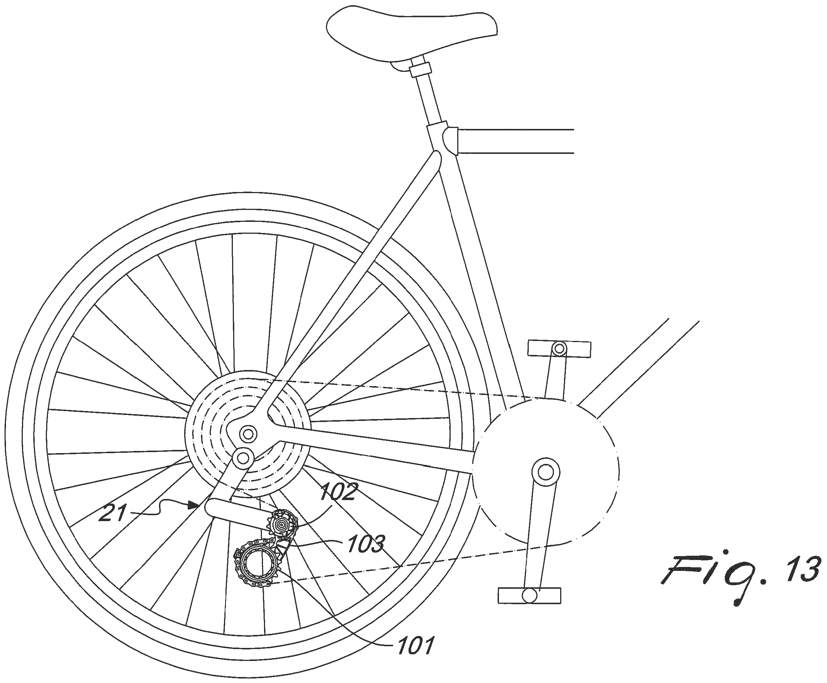

Figure 13 is a schematic view of the rear part of a bicycle having a rear derailleur 100 which comprises a tension pulley 101 and a guide pulley 102 mounted at a cage 103. The pulleys 101 and 102 may optionally each have a free space in their center. The rest of the derailleur 100 is shown only schematically. The cassette is shown also schematically at reference number 104.

Pulleys as shown and described herein may be rotatably mounted between two lateral plates of a cage on central bearings which are fitted on central bolts which connect the two lateral plates of the cage to each other, or rotatably mounted on central bearings which are fitted on a single-plated cage.

Pulleys as shown and described herein may also be rotatably mounted between two lateral plates of a cage by mounting means (and not by central bolts) and an interposed radial bearing, wherein the mounting means are arranged so as to be spaced from the center of rotation of the pulley, as it is the case in EP 20177531.9. Also, in this case the cage may be a single-plated cage, as described in EP 20177531.9.

### PREFERRED EMBODIMENTS

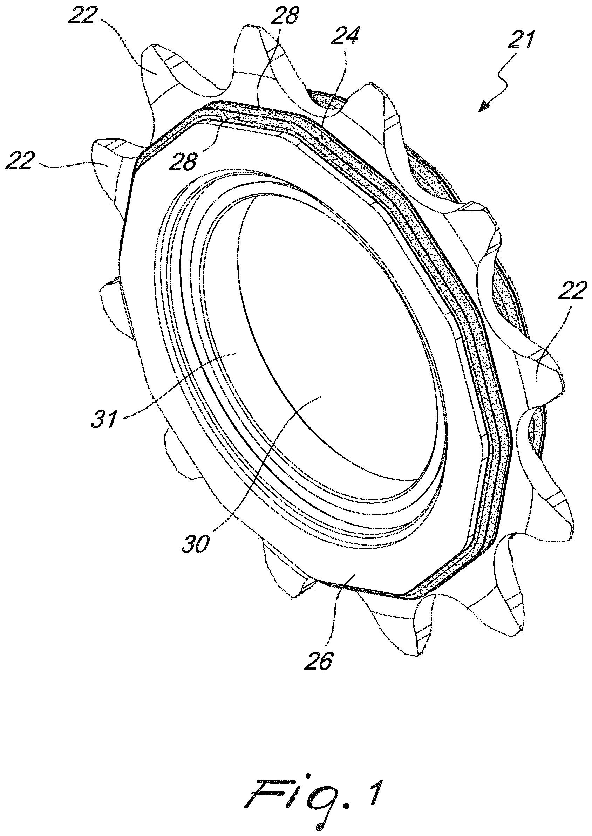

With reference to Figures 1 to 9, a first preferred embodiment of a pulley of a rear derailleur for a bicycle is described.

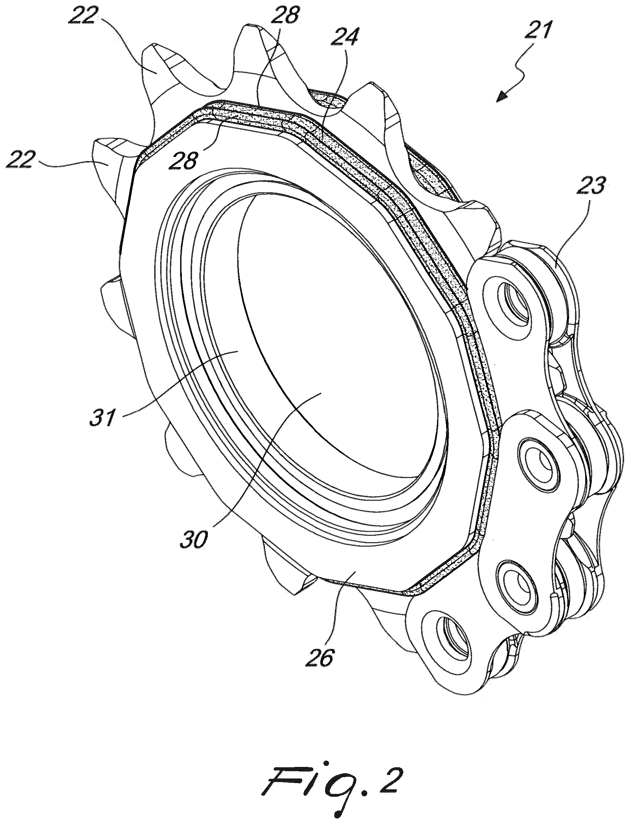

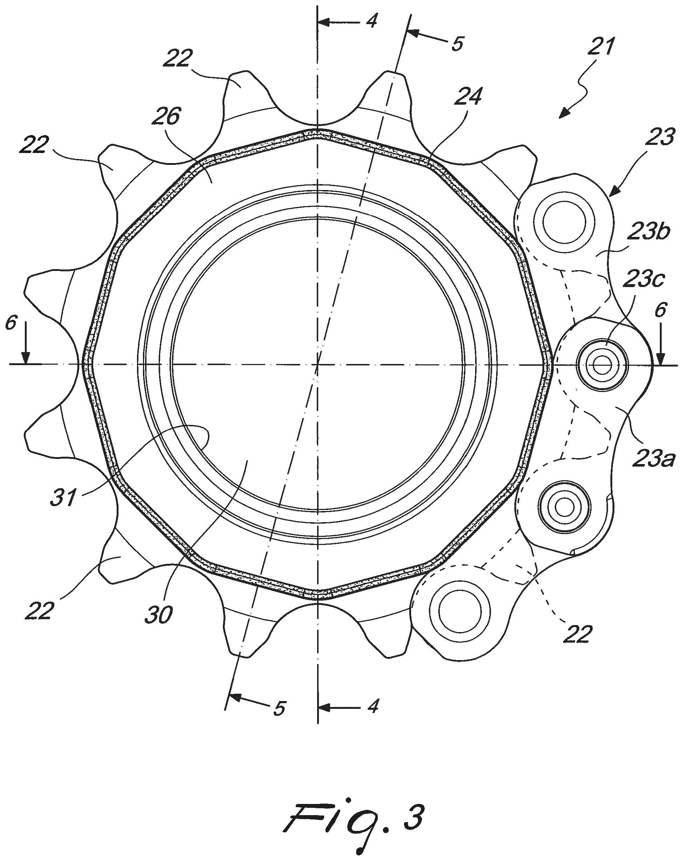

As shown therein, a pulley 21, which is shown as a guide pulley but may also be embodied as a tension pulley, has a plurality of teeth 22 adapted to come in contact with link members of a roller chain 23 running over the pulley 21 (as partially shown in Figures 2 and 3). The roller chain 23 has, as well known in the art, outer link plates 23a, inner link plates 23b und chain rollers 23c held between the inner and outer link plates about respective pins.

The pulley 21 carries on each of its axial side faces a polygonal cushioning ring 24 made of an elastically deformable material like natural or synthetic rubber, polymer or elastomer or silicone or mixtures thereof. The polygonal cushioning ring 24 made of such material has a preformed polygonal shaped which is present in the polygonal cushioning ring 24 both in the unmounted and the mounted state thereof. The material is also such as to maintain the preformed shape of the polygonal cushioning ring 24 in use. The pulley 21 can be made of plastic, metal or a reinforced composite, in particular polyamide reinforced with carbon fiber.

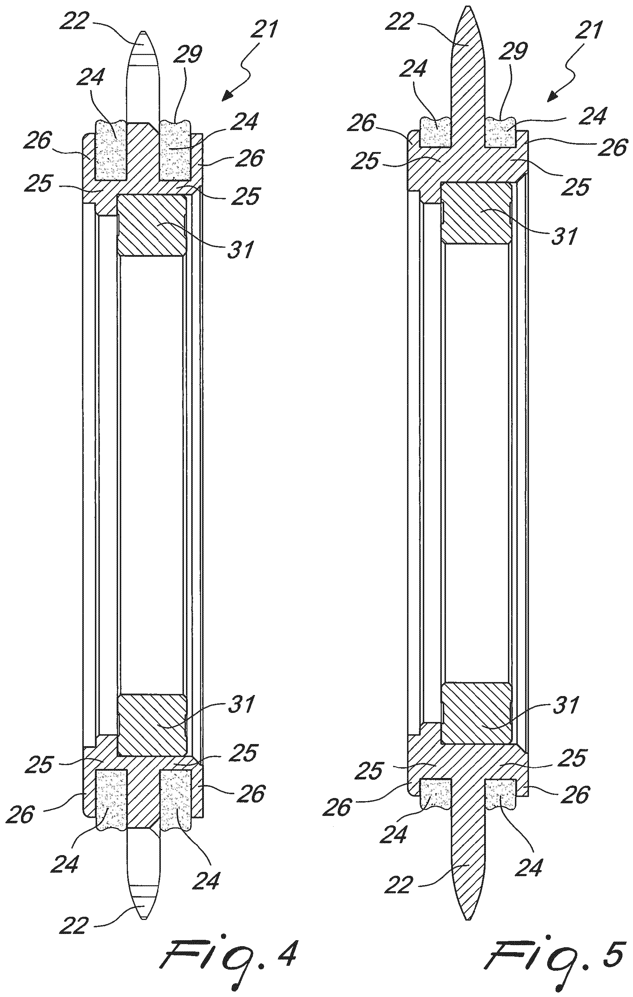

As is best seen in Figures 4 to 6 as well as 8 and 9, each polygonal cushioning ring 24 is supported by and accommodated on a respective circumferential support 25 formed adjacent to each side face of the pulley 21 and extending axially from the pulley 21. In a side view of the pulley 21, the polygonal cushioning ring 24 has a polygonal outline, wherein the number of corners of the polygon is equal to the number of teeth 22 of the pulley 21. The corners of the polygon are, in the shown mounted state, angularly offset from the centers of the teeth 22 of the pulley 21 by the half angular distance between adjacent teeth 22 of the pulley 21.

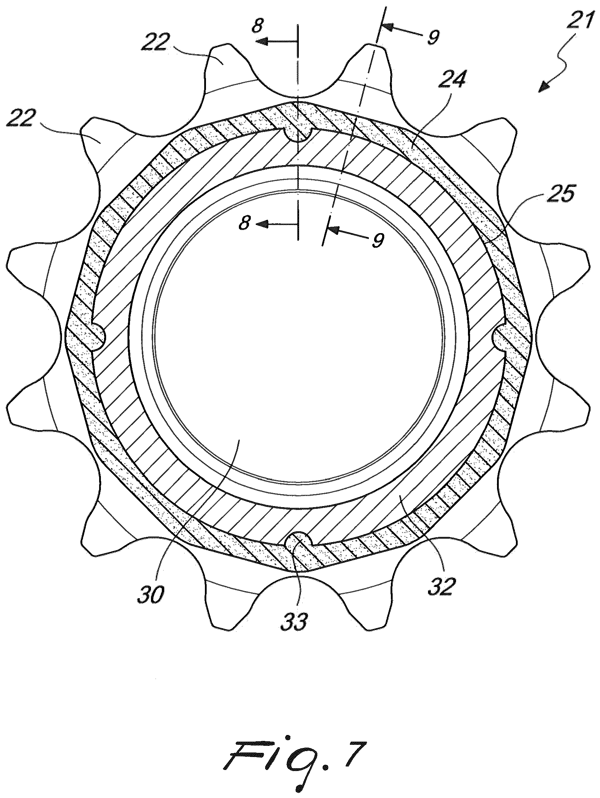

In the view of Figure 4, which is taken along the cross section at line 4-4 of Figure 3, the extension of the polygonal cushioning ring 24 in the radial direction is larger than the extension of the polygonal cushioning ring 24 in the radial direction shown in Figure 5, which is taken at the cross section at lines 5-5 of Figure 3. This is due to the preferred circular outline of the circumferential support 25 shown in Figure 7. Obviously, the extension of the polygonal cushioning ring 24 in the radial direction will vary according to the outline of the circumferential support 25, in view of the preformed polygonal outline of the polygonal cushioning ring 24 at the face facing the roller chain 23. It goes without saying that the outline of the polygonal cushioning ring 24 at the face facing the circumferential support 25 is also preformed, as the polygonal cushioning ring 24 is made of a material having a sufficient dimensional stability to maintain the intrinsic polygonal outline in the unmounted state thereof. It further goes without saying that the polygonal cushioning ring 24 has also a sufficient elasticity to allow its safe mounting to the circumferential support 25 and the radial extension 26 be elastic engagement.

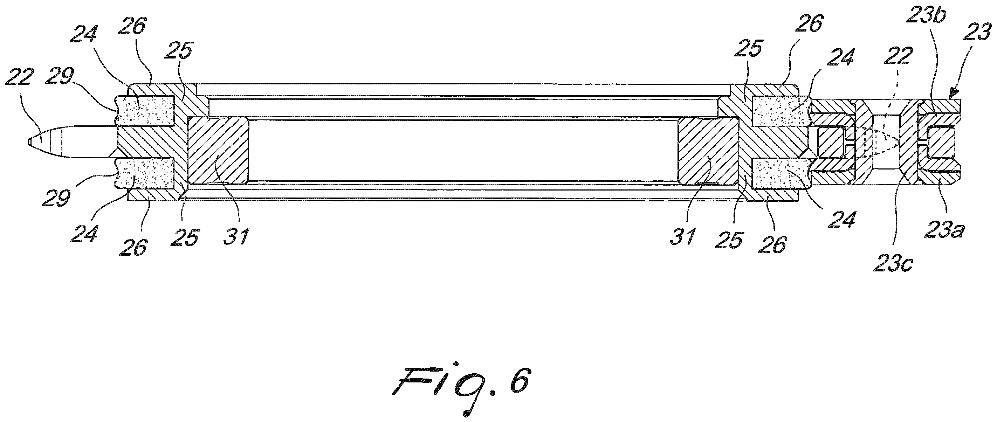

Figure 6 shows a view similar to Figure 4, which is taken along the cross section of line 6-6 of Figure 3. As distinct to Figure 4, the cross section also shows the engagement of the pulley with the roller chain 23.

The circumferential support 25 may be formed as a continuous shoulder. Preferably, a radial extension 26 is provided extending in a radial direction extending outwardly from the circumferential support 25, such that a seating for the link plates of the roller chain 23 in the polygonal cushioning ring 24 is defined between the side face of pulley 21, the radial extension 26 and the circumferential support 25.

While in the embodiment shown in the Figures 1 to 9 the radial extension 26 is shown as having a polygonal outline, as seen in the axial direction, the person skilled in the art will appreciate that other outlines, as seen in the axial direction, like a polygonal outline with rounded corners, a circular outline, a wave shape outline, a cornered outline or any other outline providing for the required degree of axial retention of the polygonal cushioning ring 24 may be provided. The radial extension 26 in any of the foregoing variations may be provided in portions only of the circumferential support 25. The circumferential support 25 may be a continuous shoulder or interrupted.

Preferably, the circumferential support 25 has an essentially circular outline, as seen in the axial direction, as can be best seen on Figure 7. Nevertheless, the circumferential support 25 may have other outlines, as seen in the axial direction, as long as the outline or its angular orientation is different from the outline of the polygonal cushioning ring 24 at its face facing the roller chain 23. A particularly advantageous outline, in addition to the circular outline, is the elliptical outline. A further advantageous outline is a polygonal outline with rounded corners, as seen in the axial direction.

The circumferential support 25 comprises antirotation means 32 which in the embodiment of Figure 7 are shown as recesses. Nevertheless, the person skilled in the art will appreciate that the antirotation means 32 can be embodied as protrusions. Furthermore, although Figure 7 shows four antirotation means 32, the person skilled in the art will appreciate that the number of antirotation means 32 can be variated to provide that the desired antirotation feature is sufficiently implemented. Same is true if the antirotation means 32 are implemented as protrusions. The matching antirotation means on the polygonal cushioning ring 24 is referenced by numeral 33 and is subject to the same variations as the antirotation means 32 of the circumferential support 25.

Furthermore, the antirotation means can be provided by means of any complementary shapes in the circumferential support 25 and the polygonal cushioning ring 24. For instance, the antirotation means can be provided in the shape of a wave or as cornered elements or in the shape of saw tooth or as crenelations. Furthermore, the antirotation means can be implemented by means of adhesion / bonding or by fixing means, like screws. Also, combinations of different types or antirotation means may be provided.

Preferably each polygonal cushioning ring 24 projects radially from the radial extensions 26 by at least approximately 2/5 of a total radial height of the polygonal cushioning ring 24 or by at least 1/4 of a total radial height of the polygonal cushioning ring 24.

Advantageously, the compressibility and height of the polygonal cushioning ring 24 has to be chosen so that in operation the link plates of the roller chain 23 may contact the polygonal cushioning ring 24 but not the radial extensions 26.

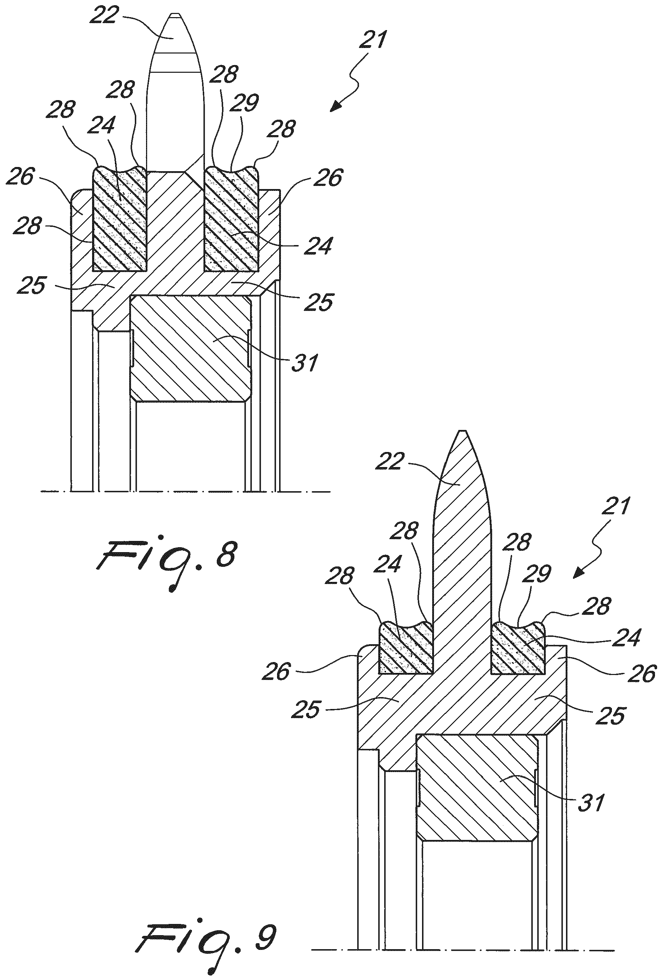

Figures 8 and 9 are respective enlarged sectional views of a radial outer part of the pulley along the line 8-8 in Figure 7, i.e., through the gap between two consecutive teeth of the pulley and through the antirotation means, and along the line 9-9 in Figure 7 through the center of a tooth where the antirotation means are missing. Due to the missing antirotation means in Figure 9, the circumferential support 25 is larger. Further, in a similar manner to Figures 4 and 5, the respective cross sections of the polygonal cushioning ring 24 have different extensions in the radial direction.

As seen best in Figures 8 and 9, preferably, the polygonal cushioning ring 24 comprises, at its side facing the roller chain 23, one groove extending along its entire perimeter length. Advantageously, the groove, as seen in a cross-sectional view through the polygonal cushioning ring 24, is provided by a recess 29 flanked by the two protrusions 28, wherein the protrusions 28 are adapted and orientated to come in contact with outer and inner link plates, respectively, of the roller chain 23 running over the pulley 21. Preferably, additional grooves can be provided at the lateral faces of the polygonal cushioning ring 24 facing the radial extension 26 and/or the pulley 21, respectively.

Further preferably, the protrusions 28 are devised as convexly curved protrusions and the recess 29 is devised as a concavely curved recess, as seen from inside the polygonal cushioning ring 24. The convexly curved protrusions 28 are connected contiguously by the concavely curved recess 29. Accordingly, the polygonal cushioning ring 24 is mounted to the pulley 21 in a manner and orientation in which the two curved protrusions 28 and the one concavely curved recess 29 partially face the outer and inner link plates, respectively, of a roller chain 23 running over the pulley 21. The inner protrusion 28 is able to contact and dampen the inner link plates of the roller chain 23, and the outer protrusion 29 is able to contact and dampen the outer link plates of the roller chain 23.

Generally speaking, the function of the groove at the face of the polygonal cushioning ring 24 facing the roller chain 23 is to dampen the forces produced by chain members running from the slack span of the roller chain 23 onto the pulley 21 in a smooth and well-defined manner and with fewer losses than cushioning rings having conventional annular or rectangular cross sections.

Otherwise, the cross section of the polygonal cushioning ring 24 shown in Figures 8 or 9 may have three even sides.

As shown in the embodiment of Figures 1 to 9, the polygonal cushioning rings 24 comprise a number of straight portions being equal to the number of teeth 22 of the pulley 21 and the straight portions are angularly aligned with one respective tooth 22 in the mounted state of the polygonal cushioning rings 24.

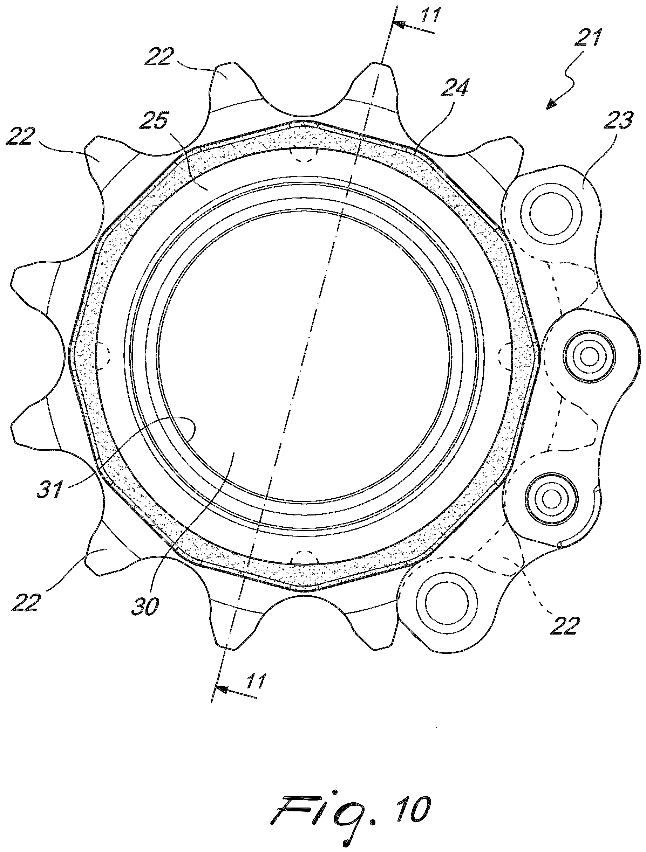

With reference to Figures 10 to 12, a second preferred embodiment of a pulley of a rear derailleur for a bicycle is described, wherein the radial extension 26 is omitted. Otherwise, the second embodiment of Figures 10 to 12 is the same as the first embodiment of Figures 1 to 9 and the detailed description thereof is omitted.

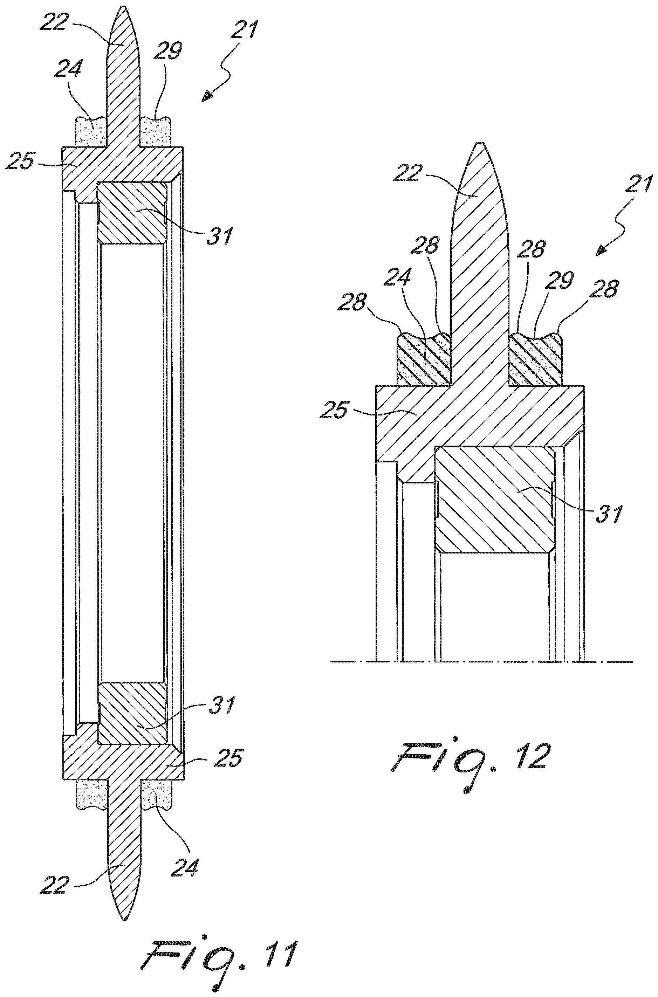

In the side view of Figure 10 the preferred antirotation means are shown in dashed lines in the circumferential support 25. As the radial extension 26 is omitted, the preferred circular outline of the circumferential support 25 is visible. Further, in the enlarged view of Figure 12, the chain roller 23 is omitted.

Therefore, the embodiments of Figures 1 to 12 are particularly suited when embodied as a guide pulley of a rear derailleur. Such a rear derailleur would be suited for chains 23 of a special type wherein the tops of the link plates are straight-line (flattops) which are known as AXS chains, as mentioned above. In a rear derailleur, the chain 23 is running with the straight tops over the guide pulley 102, as seen from Figures 3 or 10, and the straight tops are perfectly matching the straight portions of the polygonal cushioning ring 24 of the guide pulley 102. Accordingly, the impact of the chain 23 on the pulley 21 is smooth and silent.

The tension pulley 101 of such rear derailleur may be of any known type or may be or a similar type as described herein. In operation, the conventional part of the link plates of the AXS chain 23 will interact first with the tension pulley 101 and subsequently in a reverse orientation over the guide pulley 21, where the straight tops of the link plates of the chain 23 will cooperate with the straight portions of the guide pulley 21. Thus, the impact of the chain 23 at both pulleys is silent and smooth.

In the embodiments of Figures 1 to 12, the pulley 21 is of a type having a free space 30 in its center. In this case the pulley 21 will be mounted by mounting means (not shown) via an interposed roller bearing 31 to a single-plated cage of the rear derailleur. However, any conventional guide or tension pulley for a rear derailleur of a bicycle, wherein for instance the pulleys are rotatably mounted between two lateral plates of the cage on central bearings which are fitted on central bolts which connect two lateral plates of the cage to each other are envisaged as to be included in the scope of the present invention, as defined by the appended claims.

The disclosure of the present invention includes all modifications and equivalents of the subject matter recited in the claims appended hereto as permitted by applicable law. Moreover, any combination of the above-described elements in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize the disclosure may be embodied in other specific forms without departing from the disclosure or essential characteristics thereof. The foregoing embodiments are therefore to be considered illustrative rather than limiting to the disclosure described herein in all respects. The scope of the invention is thus indicated by the appended claims, rather than the foregoing description.

### List of references

- 21: pulley
- 22: tooth
- 23: roller chain
- 23a: outer link plate
- 23b: outer link plate
- 23a: chain roller
- 24: polygonal cushioning ring
- 25: circumferential support
- 26: radial extension
- 28: protrusion of the polygonal cushioning ring
- 29: recess of the polygonal cushioning ring
- 30: free space
- 31: roller bearing
- 32: antirotation means of the circumferential support
- 33: antirotation means of the polygonal cushioning ring
- 100: rear derailleur
- 101: tension pulley
- 102: guide pulley
- 103: cage
- 104: cassette

## Claims

1. A toothed pulley (21) for a bicycle rear derailleur (100), the pulley (21) carrying on each of its side faces a polygonal cushioning ring (24) made of an elastically deformable material and adapted to come in contact with link plates of a roller chain (23) running over the pulley (21), wherein
the pulley (21) includes respective circumferential supports (25) formed adjacent to each side face of the pulley (21) and extending axially away from the side face of the pulley (21), wherein each polygonal cushioning ring (24) is supported in a rotationally secured manner by a respective circumferential support (25), wherein in a side view of the pulley (21), as seen in the axial direction, **characterized in that**
each polygonal cushioning ring (24) has a preformed polygonal outline at the face facing the roller chain (23), wherein the number of corners of the polygonal cushioning ring (24) is equal to the number of teeth (22) of the pulley (21), and wherein the corners of the polygonal cushioning ring (24) are angularly offset from the centers of the teeth (22) of the pulley (21) by the half angular distance between adjacent teeth (22) of the pulley (21) in a mounted state of the polygonal cushioning ring (24).

2. The pulley (21) according to claim 1, wherein the circumferential support (25) further includes a radial extension (26) which extends outwardly in a radial direction from the circumferential support (25) and which forms preferably a flange extending upwardly from the circumferential support (25).

3. The pulley (21) according to claim 1 or 2, wherein the circumferential support (25) is made in one piece with the pulley (21).

4. The pulley (21) according to one or more of the preceding claims, wherein the circumferential support (25) is formed with an outline, as seen in the axial direction, which is different from the outline of the polygonal cushioning ring (24) at its face facing the roller chain (23).

5. The pulley (21) according to one or more of the preceding claims, wherein the circumferential support (25) is formed with a circular or with an elliptical outline, as seen in the axial direction, and wherein the circumferential support (25) is preferably formed with a circular shape.

6. The pulley (21) according to one or more of the claims 1 to 4, wherein the circumferential support (25) is formed with a polygonal outline with rounded corners, as seen in the axial direction.

7. The pulley (21) according to one or more of the preceding claims, further including antirotation means (32, 33) for securing the polygonal cushioning ring (24) against a rotation with respect to the circumferential support (25), wherein antirotation means (32, 33) are provided by at least one recess of the circumferential support (25) and at least one fitting protrusion of the polygonal cushioning ring (24) and/or by at least one protrusion of the circumferential support (25) and at least one fitting recess of the polygonal cushioning ring (24), wherein preferably the antirotation means (32, 33) further include bonding and adhesive means.

8. The pulley (21) according to one or more of the preceding claims 1 to 6, further including antirotation means (32, 33) for securing the polygonal cushioning ring (24) against a rotation with respect to the circumferential support (25), wherein said antirotation means (32, 33) are provided by a sinuous, a crenelated or a cornered outline of the circumferential support (25), as seen in the axial direction, and a corresponding inner shape of the polygonal cushioning ring (24) at the face thereof facing the circumferential support (25), wherein preferably the antirotation means (32, 33) further include bonding and adhesive means.

9. The pulley (21) according to one or more of the preceding claims 1 to 6, further including antirotation means (32, 33) for securing the polygonal cushioning ring (24) against a rotation with respect to the circumferential support (25), wherein said antirotation means (32, 33) are provided by bonding or by adhesion between the circumferential support (25) and a corresponding inner shape of the polygonal cushioning ring (24) at the face thereof facing the circumferential support (25) or by fixing means, like screws.

10. The pulley (21) according to one or more of the preceding claims, wherein the polygonal cushioning ring (24) comprises a number of straight portions equal to the number of teeth (22) of the pulley (21) and angularly aligned with one of the teeth (22) each.

11. The pulley (21) according to one or more of the preceding claims, wherein each polygonal cushioning ring (24) comprises, at least on its side facing of a roller chain (23) running over the pulley (21), a groove extending along its entire perimeter length, which groove, as seen in a cross-sectional view through the polygonal cushioning ring (24), is a recess (29) flanked by two protrusions (28), wherein the protrusions (28) are adapted and orientated to come in contact with outer and inner link plates, respectively, of the roller chain (23).

12. The pulley (21) according to claim 11, wherein in a cross-sectional view through the polygonal cushioning ring (24) the protrusions (28) are curved convexly and are connected contiguously by the recess (29) which is curved concavely, as seen from inside the polygonal cushioning ring.

13. The pulley (21) according to one or more of the preceding claims, wherein the pulley (21) is a guide pulley (102) for a bicycle rear derailleur (100).

14. The pulley (21) according to one or more of the preceding claims 2 to 13, wherein the radial extension (26) is made in one piece with the pulley (21) and/or wherein the radial extension (26) is formed with a polygonal outline with rounded corners, as seen in the axial direction.

15. A bicycle rear derailleur (100) comprising a cage (103) supporting a tension pulley (101) and a guide pulley (102) both being rotatably mounted on the cage (103), the cage (103) being movable with respect to the bicycle and adapted to guide a roller chain (23) in an S-shape, wherein the guide pulley (102) is devised according to one or more of claims 1 to 14.

16. The bicycle rear derailleur (100) according to claim 15, wherein at least one of the pulleys (101, 102) is rotatably mounted to the cage (103) by mounting means and an interposed radial bearing, wherein the mounting means are arranged so as to be spaced from the center of rotation of the pulley and are positioned along a circular mounting opening provided in the cage (103) spaced away from the center of rotation of the pulley, so as to leave a free space in the center of the pulley in its mounted state.

## Patentansprüche

1. Eine Zahnriemenscheibe (21) für eine Fahrrad-Kettenschaltung (100), wobei die Riemenscheibe (21) an jeder ihrer Seitenflächen einen vieleckigen Dämpfungsring (24) aus einem elastisch verformbaren Material trägt, der ausgebildet ist, um in Kontakt mit Kettenlaschen einer Rollenkette (23) zu kommen, die über die Riemenscheibe (21) läuft; wobei
die Riemenscheibe (21) entsprechende Umfangsträger (25) einschließt, die angrenzend an jede Seitenfläche der Riemenscheibe (21) geformt sind und sich axial von der Seitenfläche der Riemenscheibe (21) fort erstrecken; wobei jeder vieleckige Dämpfungsring (24) durch einen entsprechenden Umfangsträger (25) drehsicher gelagert ist; wobei in einer Seitenansicht der Riemenscheibe (21), gesehen in die axiale Richtung; **dadurch gekennzeichnet, dass**
jeder vieleckige Dämpfungsring (24) an der der Rollenkette (23) zugewandten Seite einen vorgeformten vieleckigen Umriss hat, wobei die Anzahl der Ecken des vieleckigen Dämpfungsrings (24) gleich der Anzahl der Zähne (22) der Riemenscheibe (21) ist und wobei die Ecken des vieleckigen Dämpfungsrings (24) in einem montierten Zustand des vieleckigen Dämpfungsrings (24) von den Zentren der Zähne (22) der Riemenscheibe (21) um den halben Winkelabstand zwischen benachbarten Zähnen (22) der Riemenscheibe (21) winklig versetzt sind.

2. Die Riemenscheibe (21) gemäß Anspruch 1, wobei der Umfangsträger (25) weiter eine radiale Erweiterung (26) einschließt, die sich in eine radiale Richtung vom Umfangsträger (25) nach außen erstreckt und vorzugsweise einen Flansch bildet, welcher sich vom Umfangsträger (25) nach oben erstreckt.

3. Die Riemenscheibe (21) gemäß Anspruch 1 oder 2, wobei der Umfangsträger (25) einteilig mit der Riemenscheibe (21) ausgebildet ist.

4. Die Riemenscheibe (21) gemäß einem oder mehreren der obigen Ansprüche, wobei der Umfangsträger (25), gesehen in die axiale Richtung, mit einem Umriss versehen ist, der sich vom Umriss des vieleckigen Dämpfungsrings (24) an seiner der Rollenkette (23) zugewandten Fläche unterscheidet.

5. Die Riemenscheibe (21) gemäß einem oder mehreren der obigen Ansprüche, wobei der Umfangsträger (25), gesehen in die axiale Richtung, mit einem kreisförmigen oder einem elliptischen Umriss versehen ist und wobei der Umfangsträger (25) vorzugsweise kreisförmig ist.

6. Die Riemenscheibe (21) gemäß einem oder mehreren der Ansprüche 1 bis 4, wobei der Umfangsträger (25), gesehen in die axiale Richtung, mit einem vieleckigen Umriss mit gerundeten Ecken versehen ist.

7. Die Riemenscheibe (21) gemäß einem oder mehreren der obigen Ansprüche, die weiter Antirotationsmittel (32, 33) zum Sichern des vieleckigen Dämpfungsrings (24) gegen eine Drehung mit Bezug auf den Umfangsträger (25) einschließt, wobei Antirotationsmittel (32, 33) durch mindestens eine Einbuchtung des Umfangsträgers (25) und mindestens einen dazu passenden Vorsprung des vieleckigen Dämpfungsrings (24) und/oder durch mindestens einen Vorsprung des Umfangsträgers (25) und mindestens eine dazu passende Einbuchtung des vieleckigen Dämpfungsrings (24) gebildet sind, wobei die Antirotationsmittel (32, 33) vorzugsweise weiter Verbindungs- und Klebemittel einschließen.

8. Die Riemenscheibe (21) gemäß einem oder mehreren der obigen Ansprüche 1 bis 6, die weiter Antirotationsmittel (32, 33) zum Sichern des vieleckigen Dämpfungsrings (24) gegen eine Drehung mit Bezug auf den Umfangsträger (25) einschließt, wobei die Antirotationsmittel (32, 33) durch einen gewundenen, zinnenförmigen oder mit Ecken versehenen Umriss des Umfangsträgers (25), in axiale Richtung gesehen, und eine entsprechende Innenform des vieleckigen Dämpfungsrings (24) an der Fläche desselben, die dem Umfangsträger (25) zugewandt ist, gebildet sind; wobei die Antirotationsmittel (32, 33) vorzugsweise weiter Verbindungs- und Klebemittel einschließen.

9. Die Riemenscheibe (21) gemäß einem oder mehreren der obigen Ansprüche 1 bis 6, die weiter Antirotationsmittel (32, 33) zum Sichern des vieleckigen Dämpfungsrings (24) gegen eine Drehung mit Bezug auf den Umfangsträger (25) einschließt, wobei die Antirotationsmittel (32, 33) durch Verbindung oder durch Klebewirkung zwischen dem Umfangsträger (25) und einer entsprechenden Innenform des vieleckigen Dämpfungsrings (24) an der Fläche desselben, die dem Umfangsträger (25) zugewandt ist, oder durch Befestigungsmittel wie Schrauben gebildet sind.

10. Die Riemenscheibe (21) gemäß einem oder mehreren der obigen Ansprüche, wobei der vieleckige Dämpfungsring (24) eine Anzahl gerader Abschnitte gleich der Anzahl der Zähne (22) der Riemenscheibe (21) umfasst, die jeweils winklig mit einem der Zähne (22) ausgerichtet sind.

11. Die Riemenscheibe (21) gemäß einem oder mehreren der obigen Ansprüche, wobei jeder vieleckige Dämpfungsring (24) zumindest auf seiner Seite, die einer über die Riemenscheibe (21) laufenden Rollenkette (23) zugewandt ist, eine Nut umfasst, welche sich über die gesamte Länge seines Umfangs erstreckt, wobei die Nut, gesehen in einer Querschnittsansicht durch den vieleckigen Dämpfungsring (24), eine von zwei Vorsprüngen (28) flankierte Vertiefung (29) ist, wobei die Vorsprünge (28) ausgebildet und ausgerichtet sind, um mit äußeren beziehungsweise inneren Kettenlaschen der Rollenkette (23) in Kontakt zu kommen.

12. Die Riemenscheibe (21) gemäß Anspruch 11, wobei in einer Querschnittsansicht durch den vieleckigen Dämpfungsring (24) die Vorsprünge (28) konvex gekrümmt und durchgehend durch die Vertiefung (29) verbunden sind, welche, gesehen von der Innenseite des vieleckigen Dämpfungsrings, konkav gekrümmt ist.

13. Die Riemenscheibe (21) gemäß einem oder mehreren der obigen Ansprüche, wobei die Riemenscheibe (21) eine Umlenkrolle (102) für eine Kettenschaltung (100) eines Fahrrads ist.

14. Die Riemenscheibe (21) gemäß einem oder mehreren der obigen Ansprüche 2 bis 13, wobei die radiale Erweiterung (26) einteilig mit der Riemenscheibe (21) ist und/oder wobei die radiale Erweiterung (26), gesehen in die axiale Richtung, mit einem vieleckigen Umriss mit gerundeten Ecken versehen ist.

15. Eine Kettenschaltung (100) eines Fahrrads, die einen Käfig (103) umfasst, welcher eine Spannrolle (101) und eine Umlenkrolle (102) trägt, die beide drehbar am Käfig (103) montiert sind, wobei der Käfig (103) mit Bezug auf das Fahrrad beweglich und ausgebildet ist, um eine Rollenkette (23) in S-Form zu führen, wobei die Umlenkrolle (102) gemäß einem oder mehreren der Ansprüche 1 bis 14 konstruiert ist.

16. Die Kettenschaltung (100) eines Fahrrads gemäß Anspruch 15, wobei mindestens eine der Rollen (101, 102) durch Montagemittel und ein zwischengeschaltetes Radiallager drehbar am Käfig (103) montiert ist; wobei die Montagemittel vom Drehpunkt der Rolle beabstandet angeordnet und entlang einer kreisförmigen Montageöffnung positioniert sind, die im Käfig (103) vom Drehpunkt der Rolle beabstandet angeordnet ist, um einen Freiraum im Zentrum der Rolle in ihrem montierten Zustand zu lassen.

## Revendications

1. Une poulie dentée (21) pour un dérailleur arrière de bicyclette (100), la poulie (21) portant sur chacune de ses faces latérales un anneau d'amortissement polygonal (24) formé d'un matériau élastiquement déformable et adapté pour entrer en contact avec les maillons d'une chaîne à rouleaux (23) passant sur la poulie (21), dans laquelle
la poulie (21) comprend des supports circonférentiels respectifs (25) formés à côté de chaque face latérale de la poulie (21) et s'étendant axialement à l'écart de la face latérale de la poulie (21), dans laquelle chaque anneau d'amortissement polygonal (24) est supporté de manière sécurisée en rotation par un support circonférentiel respectif (25), où dans une vue latérale de la poulie (21), vue dans la direction axiale, **caractérisée par le fait que**
chaque anneau d'amortissement polygonal (24) a un
contour polygonal préformé sur la face faisant face à la chaîne à rouleaux (23), où le nombre de coins de l'anneau d'amortissement polygonal (24) est égal au nombre de dents (22) de la poulie (21), et où les coins de l'anneau d'amortissement polygonal (24) sont angulairement décalés par rapport aux centres des dents (22) de la poulie (21) de la moitié de la distance angulaire entre les dents adjacentes (22) de la poulie (21) dans un état monté de l'anneau d'amortissement polygonal (24).

2. La poulie (21) selon la revendication 1, dans laquelle le support circonférentiel (25) comprend en outre une extension radiale (26) qui s'étend vers l'extérieur dans une direction radiale à partir du support circonférentiel (25) et qui forme de préférence une bride s'étendant vers le haut à partir du support circonférentiel (25).

3. La poulie (21) selon la revendication 1 ou 2, dans laquelle le support circonférentiel (25) est fabriqué en une seule pièce avec la poulie (21).

4. La poulie (21) selon l'une ou plusieurs des revendications précédentes, dans laquelle le support circonférentiel (25) est formé avec un contour, vu dans la direction axiale, qui est différent du contour de l'anneau d'amortissement polygonal (24) sur sa face tournée vers la chaîne à rouleaux (23).

5. La poulie (21) selon l'une ou plusieurs des revendications précédentes, dans laquelle le support circonférentiel (25) est formé avec un contour circulaire ou elliptique, vu dans la direction axiale, et dans laquelle le support circonférentiel (25) est de préférence formé avec une forme circulaire.

6. La poulie (21) selon une ou plusieurs des revendications 1 à 4, dans laquelle le support circonférentiel (25) est formé d'un contour polygonal avec des coins arrondis, vu dans la direction axiale.

7. La poulie (21) selon l'une ou plusieurs des revendications précédentes, en outre comprenant des moyens antirotation (32, 33) pour sécuriser l'anneau d'amortissement polygonal (24) contre une rotation par rapport au support circonférentiel (25), dans lequel les moyens antirotation (32, 33) sont assurés par au moins un renfoncement du support circonférentiel (25) et au moins une saillie d'ajustement de l'anneau d'amortissement polygonal (24) et/ou par au moins une saillie du support circonférentiel (25) et au moins un renfoncement d'ajustement de l'anneau d'amortissement polygonal (24), où les moyens antirotation (32, 33) comprennent de préférence en outre des moyens de collage et d'adhésion.

8. La poulie (21) selon l'une ou plusieurs des revendications précédentes 1 à 6, comprenant en outre des moyens antirotation (32, 33) pour sécuriser l'anneau d'amortissement polygonal (24) contre une rotation par rapport au support circonférentiel (25), dans laquelle lesdits moyens antirotation (32, 33) sont fournis par un contour sinueux, crénelé ou en coin du support circonférentiel (25), vu dans la direction axiale, et une forme intérieure correspondante de l'anneau d'amortissement polygonal (24) sur sa face tournée vers le support circonférentiel (25), où les moyens antirotation (32, 33) comprennent de préférence en outre des moyens de collage et d'adhésion.

9. La poulie (21) selon l'une ou plusieurs des revendications précédentes 1 à 6, comprenant en outre des moyens antirotation (32, 33) pour sécuriser l'anneau d'amortissement polygonal (24) contre une rotation par rapport au support circonférentiel (25), où lesdits moyens antirotation (32, 33) sont fournis par collage ou par adhésion entre le support circonférentiel (25) et une forme intérieure correspondante de l'anneau d'amortissement polygonal (24) sur sa face tournée vers le support circonférentiel (25) ou par des moyens de fixation, tels que des vis.

10. La poulie (21) selon l'une ou plusieurs des revendications précédentes, dans laquelle l'anneau d'amortissement polygonal (24) comprend un nombre de parties droites égal au nombre de dents (22) de la poulie (21) et alignées angulairement avec une des dents (22) chacune.

11. La poulie (21) selon l'une ou plusieurs des revendications précédentes, dans laquelle chaque anneau d'amortissement polygonal (24) comprend, au moins sur son côté faisant face à une chaîne à rouleaux (23) passant sur la poulie (21), une rainure s'étendant sur toute la longueur de son périmètre, laquelle rainure, vue en coupe transversale à travers l'anneau d'amortissement polygonal (24), est un renfoncement (29) flanqué de deux saillies (28), les saillies (28) étant adaptées et orientées de manière à entrer en contact avec des maillons extérieur et intérieur, respectivement, de la chaîne à rouleaux (23).

12. La poulie (21) selon la revendication 11, dans laquelle, dans une vue en coupe transversale à travers l'anneau d'amortissement polygonal (24), les saillies (28) sont incurvées de manière convexe et sont reliées de manière contiguë par le renfoncement (29) qui est incurvé de manière concave, vu de l'intérieur de l'anneau d'amortissement polygonal.

13. La poulie (21) selon une ou plusieurs des revendications précédentes, où la poulie (21) est une poulie de guidage (102) pour un dérailleur arrière de bicyclette (100).

14. La poulie (21) selon une ou plusieurs des revendications précédentes 2 à 13, dans laquelle l'extension radiale (26) est réalisée d'une seule pièce avec la poulie (21) et/ou dans laquelle l'extension radiale (26) est formée d'un contour polygonal avec des coins arrondis, vu dans la direction axiale.

15. Le dérailleur arrière de bicyclette (100) comprenant une cage (103) supportant une poulie de tension (101) et une poulie de guidage (102) toutes deux montées rotatives sur la cage (103), la cage (103) étant mobile par rapport à la bicyclette et adaptée pour guider une chaîne à rouleaux (23) en forme de S, où la poulie de guidage (102) est conçue selon l'une ou plusieurs des revendications 1 à 14.

16. Le dérailleur arrière de bicyclette (100) selon la revendication 15, dans lequel au moins une des poulies (101, 102) est montée rotative sur la cage (103) par des moyens de montage et un roulement radial interposé, les moyens de montage étant disposés de manière à être espacés du centre de rotation de la poulie et positionnés le long d'une ouverture de montage circulaire prévue dans la cage (103) à distance du centre de rotation de la poulie, de manière à laisser un espace libre au centre de la poulie à l'état monté.
